## Europäisches Patentamt
## European Patent Office
## Office européen des brevets

(19)

(11) Numéro de publication: **0 174 223**
A1

(12)

# DEMANDE DE BREVET EUROPEEN

(21) Numéro de dépôt: **85401493.3**

(22) Date de dépôt: **19.07.85**

(51) Int. Cl.⁴: **A 01 G 13/02**

(30) Priorité: **10.08.84 FR 8412662**

(43) Date de publication de la demande:
**12.03.86 Bulletin 86/11**

(84) Etats contractants désignés:
**AT CH DE GB IT LI NL SE**

(71) Demandeur: **Société de Constructions Mécaniques HUARD-UCF Société Anonyme rue des Vauzelles F-44110 Châteaubriant(FR)**

(72) Inventeur: **Bigot, Jean-Marcel
7, rue Franz Schubert
F-44110 Chateaubriant(FR)**

(72) Inventeur: **Bruneteaud, Jean-Serge
La Petite Chataigneraie
F-49420 Carbay(FR)**

(72) Inventeur: **Gentilhomme, Guy
16, rue de la Gare Louisfert
F-44110 Chateaubriant(FR)**

(72) Inventeur: **Brun, Yves
Avenue Winston Churchill
F-44110 Chateaubriant(FR)**

(74) Mandataire: **Loyer, Bertrand et al,
Cabinet Pierre Loyer 18, rue de Mogador
F-75009 Paris(FR)**

(54) **Machine agricole destinée au paillage des cultures pourvue d'un dispositif de sectionnement de bandes de film et de recouvrement par la terre des extrémités des bandes déposées sur le sol.**

(57) Machine agricole destinée au paillage de cultures par dépôt de film en matière plastique ou autre sur le sol cultivé, caractérisé par le fait qu'elle comporte un dispositif de coupe du film déposé sur le sol et de recouvrement par de la terre de son extrémité sectionnée, qui est constitué par un organe de coupe rotatif (6) s'étendant sur toute la largeur du film, monté sur un axe perpendiculaire au sens d'avancement de la machine, à l'arrière de celle-ci, et entraîné par un moteur, dans un capot (1), l'organe de coupe dépassant sous le capot, pouvant sectionner en tournant le film sur toute sa largeur, et coopérant avec le capot pour projeter et accumuler de la terre sur l'extrémité de la bande de film, l'ensemble pouvant être relevé ou abaissé par rapport au bâti de la machine.

./...

Fig.1

Machine agricole destinée au paillage des cultures pourvues d'un dispositif de sectionnement de bandes de film et de recouvrement par la terre des extrémités des bandes déposées sur le sol.

L'invention concerne un dispositif de sectionnement de bandes de film en matière plastique ou autre et de recouvrement par la terre des extrémités des bandes déposées sur le sol par une machine agricole pour le paillage de cultures.

Certaines cultures, notamment les cultures de maïs, nécessitent pour une bonne croissance d'une part une température qui ne doit pas descendre au-dessous d'un certain niveau, et d'autre part un degré hygrométrique minimum du sol.

A cet effet, on procède au paillage du sol cultivé, c'est-à-dire que l'on dépose sur le sol un matériau qui va limiter le gradient de température et le gradient d'humidité dans le sol pour maintenir celles-ci au-dessus d'une valeur minimale pendant la période de préémergence et peu après la sortie de la plante.

Depuis quelques années, le paillage est constitué par des bande de feuilles de matière plastique photodégradables, déposées sur le sol à ensemencer. Ces bandes sont déposées par des machines qui déroulent le film sur le sol cultivé, par bandes parallèles. Ces mêmes machines peuvent procéder au semis de la plante au fur et à mesure du déroulement du film en perforant celui-ci à intervalles réguliers et en plaçant simultanément une graine dans le sol à travers la perforation.

Lorsque la machine a déposé une bande sur une longueur de champ, on doit sectionner le film. Ce travail se fait à la main soit en tirant la partie à sectionner sur une lame tranchante disposée sur la machine, soit avec une lame de scie ou un fil électrique. Puis on met de la terre sur l'extrémité sectionnée pour empêcher le vent de soulever la bande. En début de bande, ou lorsque le rouleau de film terminé est remplacé par un nouveau en cours de bande, on n'a pas à sectionner le film, mais il faut également mettre de la terre sur l'extrémité.

L'intervention manuelle pour sectionner le film et recouvrir l'extrémité de la bande est une perte de temps pour l'agriculteur qui doit descendre de son tracteur.

Le but de l'invention est de procurer un dispositif de découpe du film en bout de bande et de recouvrement d'une extrémité de bande par de la terre permettant d'effectuer ce travail sans perte de temps par une commande directe depuis le tracteur.

Le problème est résolu en ce que la machine comporte un dispositif de coupe du film déposé sur le sol et de recouvrement par de la terre de son extrémité sectionnée, qui est constitué par un organe de coupe rotatif s'étendant sur toute la largeur du film, monté sur un axe perpendiculaire au sens d'avancement de la machine, entraîné par un moteur, dans un capot, l'organe de coupe dépassant sous le capot, pouvant sectionner en tournant le film sur toute sa largeur, et coopérant avec le capot pour projeter et accumuler de la terre sur l'extrémité de la bande de film, l'ensemble pouvant être relevé ou abaissé par rapport au bâti de la machine.

L'invention sera mieux comprise au moyen d'exemples de réalisation non limitatifs de l'invention décrit ci-après et illustrés sur les dessins sur lesquels :

La figure 1 représente un dispositif selon une première forme de réalisation de l'invention en position relevée derrière la dérouleuse de film ;

La figure 2 représente le dispositif de la figure 1 en position de travail ;

La figure 3 est une coupe selon la ligne A-B de la figure 2 ;

La figure 4 représente une seconde forme de réalisation dans laquelle le capot est monté basculant en fonction du sens de rotation du moteur ;

La figure 5 représente 1 la réalisation selon la figure 4, le capot étant basculé en sens inverse ;

La figure 6 est une coupe selon la ligne C-D de la figure 5 ;

La figure 7 représente une autre réalisation du rotor de coupe du dispositif selon les figures 1 à 6 ;

Les figures 8 à 10 représentent une troisième forme de réalisation de l'invention ;

La figure 11 représente une quatrième forme de réalisation de l'invention.

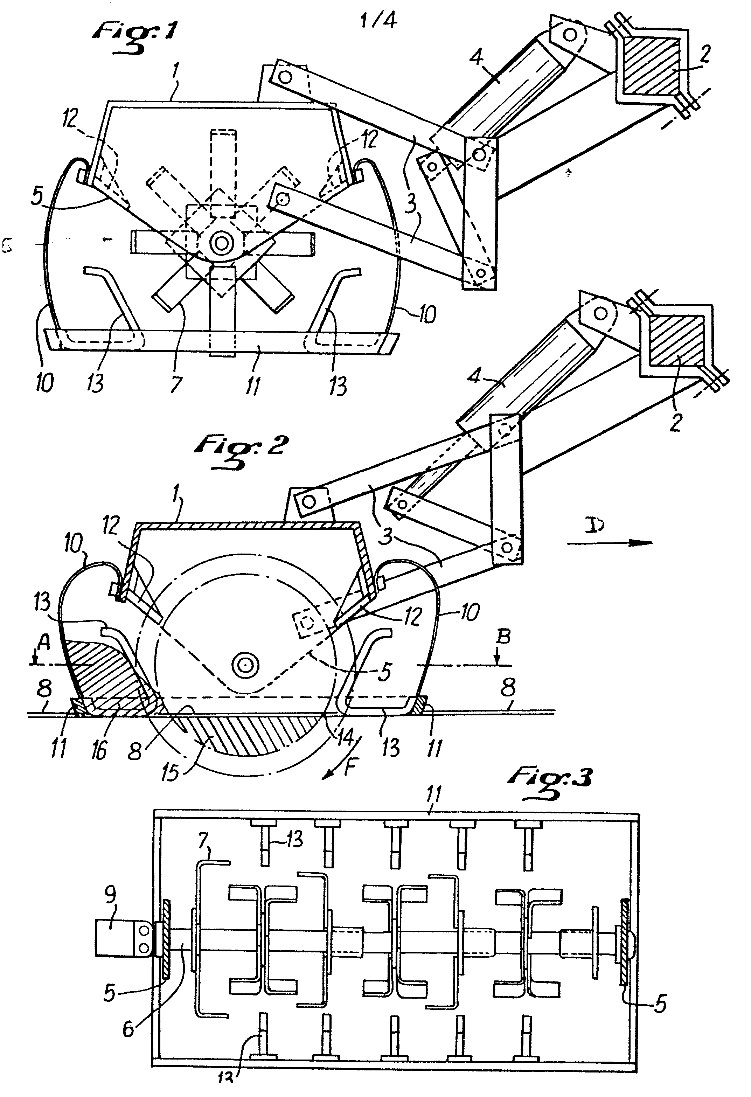

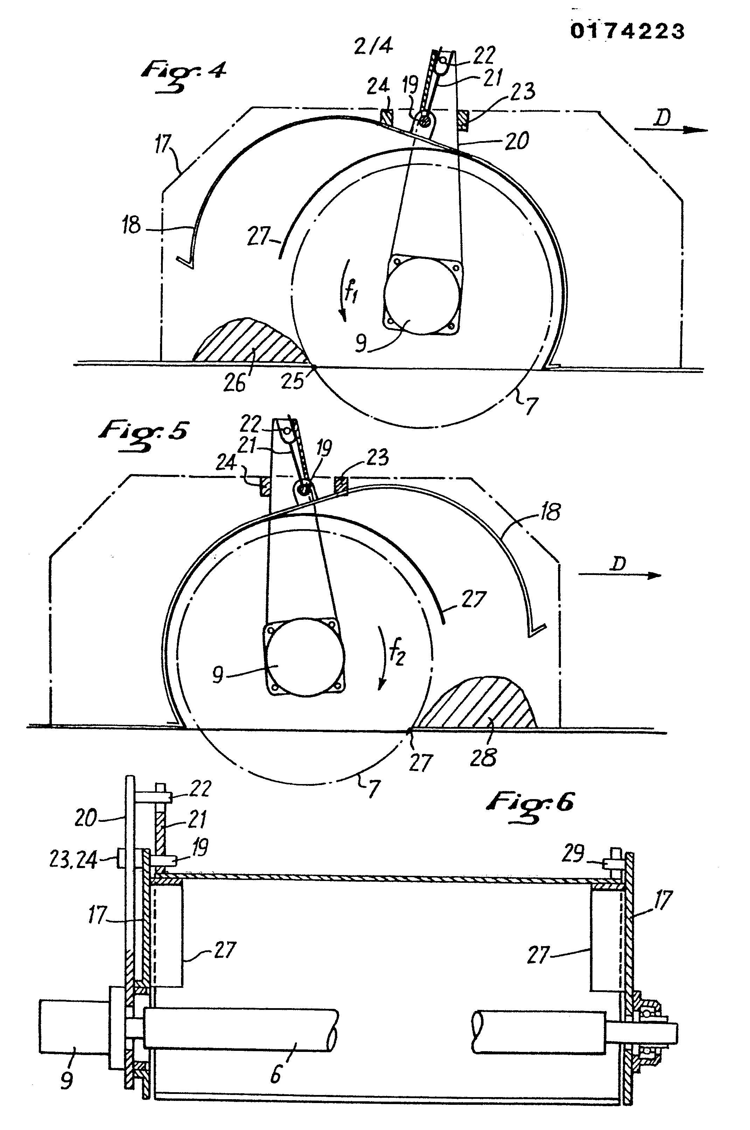

Le dispositif selon les figures 1 à 3 comprend un capot 1 monté mobile verticalement sur l'arrière du châssis 2 de la machine à déposer les bandes, par l'intermédiaire d'un parallélogramme déformable 3, les manœuvres verticales étant assurées par un vérin hydraulique 4 commandé par le distributeur hydraulique du tracteur. Sur les flancs latéraux 5 du capot 1 est monté à rotation un rotor 6 comportant des couteaux 7 disposés par paires de couteaux de mêmes dimensions perpendiculaires entre eux, les paires de couteaux voisines étant décalées de 45° et réparties régulièrement sur l'axe de façon à ce qu'ils coupent toute la largeur du film de matière plastique 8 déroulé par la machine. Des couteaux individuels sont disposés aux extrémités latérales du rotor, et sont plus longs que ceux des paires intermédiaires afin de couper le film enterré sur ses côtés. Les couteaux 7 comportent à leur extrémité opposée à l'arbre une partie coudée en équerre, parallèle à l'arbre. La longueur de cette partie est de préférence telle que le film soit coupé sans interruption sur toute sa largeur. Elle peut être toutefois légèrement plus courte. Le rotor 6 est entraîné par un moteur hydraulique 9 qui est commandé par un distributeur hydraulique double effet du tracteur afin de pouvoir tourner dans les deux sens. Des contre-lames 12 tangentant la périphérie de révolution des couteaux 7 sont disposées sur les faces antérieures avant et arrière du capot afin d'empêcher la terre soulevée par les couteaux de faire le tour du capot et de la faire tomber sur l'extrémité découpée de la bande, sous les contre-lames 12.

Un cadre 11 horizontal est relié au capot 1 par des jupes souples 10 avant et arrière. Ce cadre 11 comporte sur ses côtés avant et arrière, par rapport à la branche, des pattes 13 destinées à plaquer le film sur le sol pendant la découpe, sous l'effet du poids du cadre 11.

Le fonctionnement du dispositif est le suivant :

Lorsqu'on arrive en bout de bande après avoir avancé dans la direction D, on abaisse l'ensemble sur le sol (figure 2) après avoir mis le rotor 6 en rotation dans le sens de la flèche F. Les couteaux 7 coupent le film sur sa largeur en 14. Ils soulèvent en même temps de la terre (située en 15 sur la figure 2) et la projettent en arrière. La terre projetée est arrêtée par la

0174223

jupe 10 et par la contre-lame 12. Elle se dépose en 16 sur l'extrémité de bande. Après un certain nombre de tours, le film a été coupé et la partie restant sur le sol a été recouverte de terre sur son extrémité. Ceci a été effectué en une seule manœuvre. On arrête alors le moteur hydraulique et on relève le dispositif.

Lorsqu'on arrive en début de bande, il n'y a pas de film à couper. On fait tourner le rotor en sens inverse de la flèche F et la terre se dépose sur le début de la bande, à l'avant du rotor.

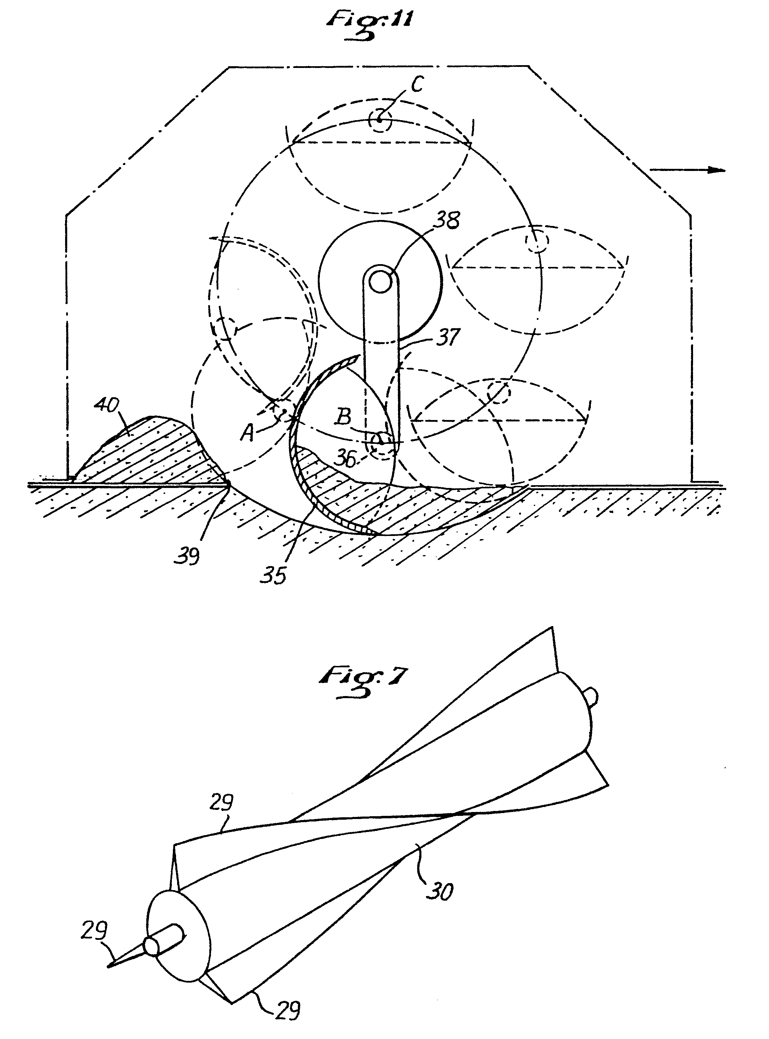

Les figures 4 à 6 montrent un second exemple de réalisation de l'invention.

Dans cet exemple, le capot 18 a une forme essentiellement semi-cylindrique allongée, comportant une partie avant 18b et une partie arrière 18a de section approximativement en quart de cercle, ayant un rayon légèrement supérieur à celui du rotor et reliées par une partie de section rectiligne 18c. Le capot est monté oscillant autour de son sommet sur des axes 19 disposés sur les flancs latéraux 17 du dispositif. Le basculement du capot 18 est commandé par un premier levier 20 solidaire du bâti du moteur 9, articulé à son extrémité libre par un téton 22 glissant dans la fourche d'un second levier 21 solidaire du capot 18.

Lorsque le moteur tourne dans le sens de la flèche $F_1$ (figure 4), le film est coupé en 25.

Par réaction au sens de rotation du rotor 6, le bâti du moteur 9 et le levier 20 basculent dans le sens inverse jusqu'à ce que le levier 20 rencontre une butée 23. Cela provoque le basculement dans le même sens du capôt 18 jusqu'à une butée 27 située à l'intérieur. La terre entraînée par le rotor 6 est guidée par la partie antérieure du capot et s'accumule à l'arrière du rotor en 26 sur le bord coupé du film.

En début de bande (ou en début de bobine de film), le rotor tourne dans le sens de la flèche $F_2$. Le levier 20 bascule en sens opposé jusqu'a la butée 24 . Le capot bascule aussi dans le sens opposé (figure 5) jusqu'à l'autre butée 27 et la terre s'accumule en 28 sur le bord de la bande.

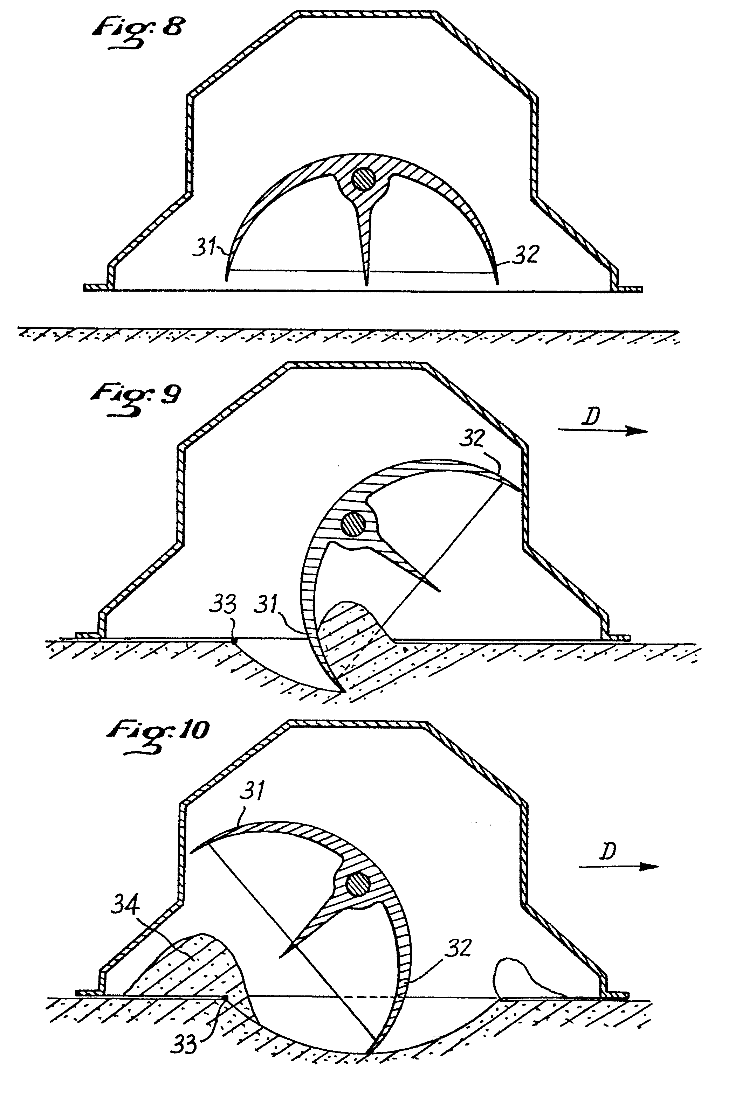

Les figures 8 à 10 montrent un troisième exemple de réalisation.

Dans cet exemple, le capot est fixe et l'organe de coupe est constitué par un corps semi-cylindrique à bords tranchants. Une cloison centrale 41, de hauteur à peu près égale au rayon du corps délimite deux demi-godets 31 et 32. L'organe de coupe pivote autour de son sommet.

En fin de bande le film est découpé en 33 par le bord tranchant du demi-godet 31 et la terre est enlevée et transportée par le demi-godet 31 qui joue le rôle d'une pelle pour être versée en 34 à l'arrière, sur le bord coupé du film. En début de bande ou en début de bobine de film, l'organe de coupe tourne dans l'autre sens et le demi-godet 32 dépose de la terre sur le bord de la bande à l'avant du dispositif.

La figure 11 montre un quatrième exemple de réalisation. Dans cet exemple le rotor est constitué d'un godet 35 à bords coupants monté à pivotement en 36 sur des bras 37 entraînés par l'arbre 38. En fin de bande, le film est coupé en 39 par le bord coupant du godet 35 en position verticale. Entre les points A et B, il n'y a pas de mouvement différentiel entre le pivot 36 du godet et le bras 37. De B à C le godet tourne pour se mettre en position horizontale et entraîner la terre sans la verser. De C à A le godet pivote à nouveau par rapport au bras pour verser la terre en 40 sur le bord coupé de la bande. En début de bande ou en début de bobine de film le processus se déroule en sens inverse.

Sur la figure 7, on a représenté une seconde forme de réalisation du rotor des exemples des figures 1 à 3 et 4 à 6. Le rotor est constitué par un arbre 30 sur lequel sont disposées des lames 29 s'étendant hélicoïdalement sur toute la longueur de l'arbre.

Le sectionnement du film se fait progressivement d'un bord à l'autre tandis que la terre est entraînée et versée par les lames sur le bord de la bande.

6     **0174223**

<u>REVENDICATIONS</u>

1. Machine agricole destinée au paillage de cultures par dépôt de film en matière plastique ou autre sur le sol cultivé, caractérisé par le fait qu'elle comporte un dispositif de coupe du film déposé sur le sol et de recouvrement par de la terre de son extrémité sectionnée, qui est constitué par un organe de coupe rotatif (6) s'étendant sur toute la largeur du film, monté sur un axe perpendiculaire au sens d'avancement de la machine, à l'arrière de celle-ci, et entraîné par un moteur (9), dans un capot (1), l'organe de coupe dépassant sous le capot, pouvant sectionner en tournant le film sur toute sa largeur, et coopérant avec le capot pour projeter et accumuler de la terre sur l'extrémité de la bande de film, l'ensemble pouvant être relevé ou abaissé par rapport au bâti de la machine.

2. Machine selon la revendication 1, caractérisée par le fait que l'organe de coupe est constitué par un rotor comportant des couteaux (7) disposés sur l'axe de façon à découper sur toute sa largeur le film déposé sur le sol lorsque l'ensemble est abaissé et à prélever de la terre devant l'extrémité du film pour l'entraîner dans sa rotation.

3. Machine selon la revendication 1, caractérisée par le fait que les couteaux (7) sont constitués par des lames en équerre dont une branche est perpendiculaire à l'axe et l'autre s'étend parallèlement à celui-ci pour découper le film sur sa largeur et prélever la terre à l'avant de la découpe.

4. Machine selon l'ensemble des revendications 2 et 3, caractérisée par le fait que les couteaux (7) sont disposés par paires de couteaux de mêmes dimensions perpendiculaires entre eux, les paires voisines étant décalées angulairement de 45° et réparties régulièrement sur l'axe.

5. Machine selon l'une quelconque des revendications 2 à 4, caractérisée par le fait que des couteaux individuels sont disposés aux deux extrémités de l'axe et sont radialement plus longs que les couteaux (7) intermédiaires afin de découper le film recouvert de terre sur ses bords latéraux.

6. Machine selon la revendication 1, caractérisée par le fait que l'organe de coupe rotatif (6) est constitué par un arbre cylindrique pourvu de lames radiales (29), s'étendant hélicoïdalement sur sa périphérie d'une extrémité à l'autre.

7

0174223

7. Machine selon l'une quelconque des revendications précédentes, caractérisée par le fait que le capot (1) comporte une partie supérieure rigide comportant à l'intérieur des bords avant et arrière, par rapport au sens d'avancement de la machine, des contre-lames (12) répartis sur toute la longueur du bord et tangentant la trajectoire des extrémités des couteaux (7) intermédiaires ou des lames pour faire tomber la terre entraînée par l'organe de coupe sur l'extrémité de la bande présente sous le capot.

8. Machine selon l'une quelconque des revendications précédentes, caractérisée par le fait que la partie supérieure rigide du capot (1) prolongée vers le bas, à l'avant et à l'arrière par rapport au sens d'avancement, par des jupes souples (10) dont la base prend appui sur le sol lorsque l'ensemble commence à s'abaisser et se déforment jusqu'à ce que l'ensemble soit totalement abaissé, empêchant la terre soulevée par le rotor (6) de se déposer ailleurs que sur l'extrémité de la bande de film (8) présente sous le capot.

9. Machine selon la revendication 8, caractérisée par le fait que la base des jupes est reliée à un cadre rigide (11) prenant appui sur le sol et sur la bande de film dès le début de l'abaissement de l'ensemble, et comportant des pales (13) réparties à intervalles réguliers à l'intérieur du cadre sur les bords perpendiculaires à l'avancement de façon à maintenir le film (8) plaqué contre le sol pendant la découpe et/ou le recouvrement de l'extrémité de bande par la terre.

10. Machine selon l'une quelconque des revendications 1 à 6, caractérisée par le fait que le capot (18) a une forme générale semi-cylindrique comportant une partie avant (18b) et une partie arrière (18a) de section approximativement en quart de cercle, reliées par une partie (18c) de section rectiligne, et peut basculer autour d'un axe (19) situé au-dessus du milieu de cette partie rectiligne (18c) et parallèle à l'axe de l'organe de coupe, en sens inverse de la rotation de l'organe de coupe jusqu'entre deux positions limitées par des butées (27) de façon à guider la terre entraînée par l'organe de coupe jusqu'au-dessous de l'extrémité de la bande située sous le capot.

11. Machine selon la revendication 10, caractérisée par le fait que le basculement du capot est commandé par un premier levier (20), solidaire du bâti du moteur monté sur une extrémité de l'axe de l'organe de coupe, et articulé à son extrémité libre sur un second levier (21) solidaire du capot, de façon à faire basculer ce dernier jusqu'à buter dans un sens ou dans l'autre, en réaction à la rotation du rotor.

12. Machine selon la revendication 1, caractérisée par le fait que l'organe de coupe rotatif est constitué par un corps semi-cylindrique creux à bords longitudinaux tranchants, comportant une cloison radiale centrale (41) de hauteur égale au rayon de la pièce semi-cylindrique, de façon à constituer deux demi-godets (31, 32) tournant autour de son axe situé à son sommet, la partie pratiquant la découpe de la bande servant également de pelle pour enlever la terre devant l'extrémité de la bande et la déposer sur celle-ci après un tour.

13. Machine selon la revendication 1, caractérisée par le fait que l'organe de coupe est constitué par un godet (35) semi-cylindrique creux à bords coupants articulé sur son axe géométrique sur l'extrémité d'un levier (37) entraîné en rotation par le moteur et pourvu de moyens de rotation propres, de façon à prendre une position verticale, lorsque le levier est tourné vers le bas, pour couper le film et ramasser la terre devant l'extrémité découpée de la bande, soulever la terre en position horizontale lorsque le levier remonte, et basculer lorsque le levier redescend pour déverser la terre sur l'extrémité de la bande.

0174223

Fig.1

Fig.2

Fig.3

0174223

**Fig. 4**

**Fig. 5**

**Fig. 6**

3/4

0174223

Fig.11

Fig.7

Fig. 8

31          32

Fig. 9

32

D

33    31

Fig. 10

31

34

D

32

33

**0174223**

Numero de la demande

**Office européen**
**des brevets**

# RAPPORT DE RECHERCHE EUROPEENNE

EP 85 40 1493

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| A | FR-A-2 483 380 (BRIERE)<br>* Page 2, ligne 27 - page 3, ligne 13; figure * | 1 | A 01 G 13/02 |
| A | US-A-3 751 821 (OLMO)<br>* Colonne 4, ligne 64 - colonne 5, ligne 33; figure 1 * | 1 | |

DOMAINES TECHNIQUES
RECHERCHES (Int Cl 4)

A 01 G

Le présent rapport de recherche a été établi pour toutes les revendications

| Lieu de la recherche<br>LA HAYE | Date d'achèvement de la recherche | HERYGERS Examinateur |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82